# EUROPÄISCHE PATENTANMELDUNG

(11) **EP 1 702 808 A2**
(43) Veröffentlichungstag der Anmeldung: **20.09.2006**
(21) Anmeldenummer: 06100866.0
(22) Anmeldetag: 26.01.2006
(51) Int. Cl.: B60R 16/02, H02J 1/10

(54) **Vorrichtung zur Spannungsversorgung der Verbraucher eines Kraftfahrzeug-Bordnetzes unter Verwendung von mehreren Generatoren**

(30) Priorität: 17.03.2005 DE 102005012273
(71) Anmelder: ROBERT BOSCH GMBH, 70442 Stuttgart (DE)
(72) Erfinder: Wolf, Gert, 71563, Affalterbach (DE)

(57) **Zusammenfassung**

Die Erfindung betrifft eine Vorrichtung zur Spannungsversorgung der Verbraucher eines Kraftfahrzeug-Bordnetzes. Sie weist einen ersten Generator, einen dem ersten Generator zugeordneten Regler, einen zweiten Generator, einen dem zweiten Generator zugeordneten Regler und ein Steuergerät auf. Das Steuergerät ist mit mindestens einem, vorzugsweise beiden, der Regler verbunden und führt diesem Steuersignale zu, aufgrund derer die Auslastung der Generatoren angeglichen wird.

## Beschreibung

Die Erfindung betrifft eine Vorrichtung zur Spannungsversorgung der Verbraucher eines Kraftfahrzeug-Bordnetzes unter Verwendung von mehreren Generatoren.

### Stand der Technik

Es ist bereits bekannt, zu einer Spannungsversorgung der Verbraucher eines Kraftfahrzeug-Bordnetzes zwei Generatoren parallel zu schalten. Eine derartige Einrichtung zur Spannungsversorgung in einem Kraftfahrzeug mit parallel geschalteten Generatoren ist aus der DE 41 08 861 A1 bekannt. Bei dieser bekannten Einrichtung ist jedem der Generatoren ein Spannungsregler zugeordnet. Weiterhin weist die bekannte Einrichtung mindestens eine Batterie auf, deren einer Anschluss über einen Zündschalter mit dem Spannungsregler verbindbar ist. Ferner ist eine Ladekontrolleinrichtung vorgesehen, die mit dem Zündschalter und den Spannungsreglern in Verbindung steht und über ein Schaltmittel mit dem vorzugsweise auf Masse liegenden negativen Anschluss der Batterie verbindbar ist. Zwischen der Ladekontrolleinrichtung, den Spannungsreglern und dem genannten Schaltmittel liegt eine Schaltungsanordnung mit mehreren in einer Richtung leitenden und in einer Richtung sperrenden Bauelementen. Durch diese bekannte Einrichtung soll erreicht werden, dass durch den Einsatz zweier Generatoren eine hohe elektrische Leistung erzeugt werden kann und dass mit einer einzigen Anzeige, beispielsweise einer Ladekontrolllampe, auftretende Fehler in einem der beiden Generator-Spannungsregler-Systeme angezeigt werden können, wobei das andere Generator-Spannungsregler-System problemlos weiterarbeiten kann.

### Vorteile der Erfindung

Eine Vorrichtung zur Spannungsversorgung mit den im Anspruch 1 angegebenen Merkmalen weist demgegenüber den Vorteil auf, dass die Auslastung der Generatoren individuell eingestellt werden kann. Insbesondere kann die Auslastung der Generatoren derart beeinflusst werden, dass alle Generatoren der Vorrichtung gleich ausgelastet sind, d. h. mit annähernd gleichem Anteil ihrer jeweiligen Maximalleistung betrieben werden. Dies verlängert die Lebensdauer der Generatoren und auch der Gesamtvorrichtung, da letztere beim Ausfall eines der Generatoren ebenfalls nicht mehr funktionsfähig wäre.

Vorzugsweise generiert das Steuergerät der Vorrichtung Steuersignale, durch welche den Reglern unterschiedliche Regelgeschwindigkeiten bzw. Zeitkonstanten vorgegeben werden. Durch diese Maßnahme wird die Stabilität der Spannungsversorgung erhöht.

Eine weitere vorteilhafte Ausgestaltung einer Vorrichtung gemäß der Erfindung besteht darin, einem der Generatoren Masterfunktion und dem oder den anderen Generatoren Slavefunktion zuzuordnen. Vorzugsweise wird demjenigen Generator Masterfunktion zugeordnet, der das größte Übersetzungsverhältnis von Erregerstrom zu Generatorstrom aufweist. Dadurch kann dieser Generator schnell alle Laständerungen ausgleichen. Jeder weitere Generator des Bordnetzes wird vom Steuergerät als Slave behandelt. Bezüglich dieser weiteren Generatoren werden vorzugsweise hohe Load-Response-Zeiten eingestellt, so dass die weiteren Generatoren beim Auftreten von Laständerungen anfänglich nicht, d. h. erst verzögert, reagieren. Das Steuergerät kann beispielsweise über eine bitsynchrone Schnittstelle dem jeweiligen Regler einen neuen Erregerstromsollwert oder einen Erregerspannungssollwert vorgeben, der mittels zeitlicher Rampen angefahren wird. Der jeweilige Sollwert wird unter Verwendung von Informationen über den Auslastungssprung des Masterfunktion ausübenden Generators und über die bei den Slavefunktion ausübenden Generatoren zur Verfügung stehenden Leistungsreserven ermittelt. Das Steuergerät kann bei Bedarf jederzeit die vorgenannten Master-Slave-Zuordnungen ändern und einem der bisher Slavefunktion ausübenden Generatoren Masterfunktion zuordnen. Vorzugsweise kann das Steuergerät weiterhin durch eine geeignete Vorgabe der Auslastung der Slavefunktion ausübenden Generatoren eine Mindestauslastung jedes Generators sichern.

Vorzugsweise gehören die Generatoren verschiedenen Bordnetzteilen an und sind über ein Koppelelement miteinander verbunden oder verbindbar. Tritt beispielsweise in einem der Bordnetzteile ein Fehler auf, kann der Generator im nicht betroffenen Teilbordnetz allein weiter betrieben werden. In diesem Fall erzeugt das Steuergerät für den Generatorregler des nicht betroffenen Teilbordnetzes Steuersignale, die Spannungsvorgaben entsprechen und nicht Auslastungsvorgaben wie im Falle eines Parallelbetriebes mehrerer Generatoren.

War dem Generator des nicht vom Fehler betroffenen Teilbordnetzes im vorherigen Parallelbetrieb Slavefunktion zugeordnet, dann wird ihm nach dem Auftreten des genannten Fehlers wieder eine hohe Regelgeschwindigkeit zugeordnet, so dass er auftretende Änderungen der Ausgangsspannung des Generators schnell ausregeln kann.

Die Stromversorgung des Steuergerätes erfolgt vorzugsweise aus dem Bordnetz, beim Vorliegen mehrerer Teilbordnetze aus mindestens einem der Teilbordnetze, vorzugsweise unter Verwendung einer oder mehrerer Dioden.

### Zeichnung

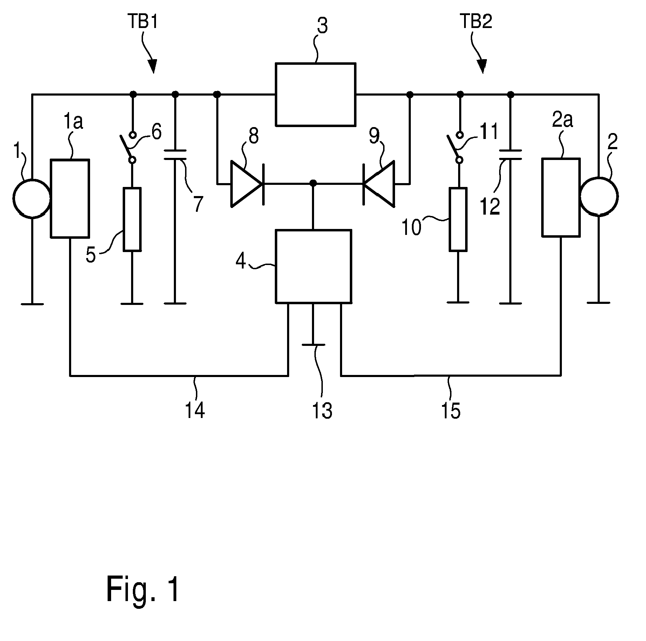

Nachfolgend wird ein Ausführungsbeispiel für die Erfindung anhand der Figur 1 näher erläutert, welche ein Blockschaltbild einer Vorrichtung zur Spannungsversorgung der Verbraucher eines Kraftfahrzeug-Bordnetzes zeigt.

### Beschreibung

Die in der Figur 1 gezeigte Vorrichtung weist ein aus Teilbordnetzen TB1 und TB2 bestehendes Bordnetz auf. Die Teilbordnetze TB1 und TB2 sind über ein Koppelelement 3 miteinander verbunden bzw. verbindbar. Bei diesem Koppelelement 3 handelt es sich gemäß einem ersten Ausführungsbeispiel um eine Sicherung. Das Koppelelement 3 ist nicht zwingend notwendig. Um die Vorteile der Erfindung auszunutzen, reicht eine einfache Verbindung der beiden Bordnetzteile aus.

Im ersten Teilbordnetz TB1 ist ein erster Generator 1 vorgesehen, dem ein erster Regler 1a zugeordnet ist. Die Ausgangsspannung des Generators 1 dient zur Spannungsversorgung der Verbraucher des Bordnetzes, insbesondere der Verbraucher 5 des ersten Teilbordnetzes, die mit dem Generator 1 über einen Schalter 6 verbunden sind. Parallel zur Reihenschaltung, die aus dem Schalter 6 und den Verbrauchern 5 besteht, ist ein Speicherkondensator 7 vorgesehen. Die Regelung des Generators 1 erfolgt durch Steuersignale, die in einem Steuergerät 4 generiert und dem dem Generator 1 zugeordneten Regler 1a über eine erste Steuerleitung 14 zugeführt werden. Das Steuergerät 4 ist mit Masse 13 verbunden.

Im zweiten Teilbordnetz TB2 ist ein zweiter Generator 2 vorgesehen, dem ein zweiter Regler 2a zugeordnet ist. Die Ausgangsspannung des Generators 2 dient zur Spannungsversorgung der Verbraucher des Bordnetzes, insbesondere der Verbraucher 10 des zweiten Teilbordnetzes TB2, die mit dem Generator 2 über einen Schalter 11 verbunden sind. Parallel zur Reihenschaltung, die aus dem Schalter 11 und den Verbrauchern 10 besteht, ist ein Speicherkondensator 12 vorgesehen. Die Regelung des Generators 2 erfolgt durch Steuersignale, die im Steuergerät 4 generiert und dem dem Generator 2 zugeordneten Regler 2a über eine Steuerleitung 15 zugeführt werden.

Die Energieversorgung des Steuergerätes 4 erfolgt aus dem Bordnetz. Zu diesem Zweck ist das Steuergerät 4 über eine Diode 8 mit dem Teilbordnetz TB1 und über eine Diode 9 mit dem Teilbordnetz TB2 verbunden.

Bei einer derartigen Vorrichtung können sich im Betrieb bedingt durch die Verkabelung des Bordnetzes verschiedene Ausgangsspannungen der Generatoren 1 und 2 einstellen, so dass auch die Auslastung der Generatoren 1 und 2 unterschiedlich ist.

Um eine derartige unterschiedliche Auslastung der Generatoren zu vermeiden, ist das Steuergerät 4 mit mindestens einem, vorzugsweise aber beiden Reglern 1a und 2a verbunden, um diesen Reglern Steuersignale zuzuführen, die die Auslastung des jeweiligen Generators in dem Sinne verändern, dass die Auslastung der Generatoren gleichmäßig ist. Dadurch wird in vorteilhafter Weise erreicht, dass die Lebensdauer der Generatoren und damit auch der Gesamtvorrichtung vergrößert ist.

In vorteilhafter Weise ordnet das Steuergerät 4 einem der beiden Generatoren Masterfunktion zu. Vorzugsweise wird derjenige Generator, der das größte Übersetzungsverhältnis von Erregerstrom zu Generatorstrom besitzt, mit der Masterfunktion versehen. Diesem Generator wird eine hohe Regelgeschwindigkeit, d. h. eine kleine Regelzeitkonstante, zugeordnet, aufgrund derer der Generator dazu in der Lage ist, schnell alle auftretenden Laständerungen auszugleichen.

Der andere Generator wird vom Steuergerät 4 mit Slavefunktion versehen. Diesem Generator wird eine kleine Regelgeschwindigkeit, d. h. eine große Regelzeitkonstante bzw. eine hohe Load-Response-Zeit, zugeordnet. Dies hat zur Folge, dass dieser Generator auf Laständerungen erst verzögert reagiert.

Durch diese Einstellung unterschiedlicher Zeitkonstanten innerhalb der beiden Regelkreise wird die Stabilität der Spannungsversorgung der Verbraucher erhöht, da sich die beiden Regelkreise gegenseitig nicht beeinflussen.

Die Übertragung der Steuersignale, die Informationen über eine auslastungsbestimmende Größe des jeweiligen Generators enthalten, über die Steuerleitungen 14 und 15 erfolgt vorzugsweise jeweils über die bitsynchrone Schnittstelle (BSS-Schnittstelle) des jeweiligen Reglers. Dabei wird jeweils ein neuer Erregerstromsollwert oder ein Erregerspannungssollwert vorgegeben, der mittels geeigneter zeitlicher Rampen angenähert wird. Bei der Berechnung der genannten Sollwerte verwendet das Steuergerät 4 insbesondere Informationen über den Auslastungssprung des Masterfunktion ausübenden Generators sowie Informationen über die beim Slavefunktion ausübenden Generator zur Verfügung stehenden Leistungsreserven. Weiterhin achtet das Steuergerät 4 bei der Ermittlung der genannten Sollwerte darauf, dass bezüglich der Auslastung des Slavegenerators eine vorgegebene Mindestauslastung nicht unterschritten wird. Im Betrieb wird vorzugsweise beim Erreichen dieses vorgegebenen Minimalwertes eine Fehlermeldung ausgegeben, um zu signalisieren, dass die beiden Generatoren nicht mehr elektrisch verbunden sind.

Um Schäden durch Überspannungen zu vermeiden, ist der jeweils zugehörige Regler derart eingestellt, dass er die Ausgangsspannung des jeweiligen Generators auf einen vorgegebenen Maximalwert begrenzt. Dadurch wird die Lebensdauer des jeweiligen Generators und damit der Gesamtvorrichtung weiter erhöht. Vorzugsweise wird bei Erreichen des vorgegebenen Maximalwertes eine Fehlermeldung ausgegeben, aus welcher ersichtlich ist, dass die beiden Generatoren nicht mehr elektrisch verbunden sind.

Im Normalbetrieb sind beim vorstehend beschriebenen Ausführungsbeispiel die beiden Teilbordnetze TB1 und TB2 und auch die beiden Generatoren 1 und 2 über die Sicherung 3 miteinander verbunden.

Löst im Fehlerfall die genannte Sicherung aus, dann sind die beiden Teilbordnetze voneinander getrennt. In diesem Fall sind die Generatoren 1 und 2 ausschließlich zur Versorgung der Verbraucher des jeweiligen Teilbordnetzes TB1 bzw. TB2 vorgesehen. Zu diesem Zweck überträgt das Steuergerät über die jeweilige Steuerleitung 14 bzw. 15 nicht mehr - wie bei einem Parallelbetrieb zweier Generatoren - auslastungsbestimmende Steuersignale an die Generatorregler, sondern Spannunsgvorgaben enthaltende Steuersignale. Die Spannungsvorgaben an die Generatorregler 1a und 2a können dabei unterschiedliche Sollspannungswerte enthalten. Weiterhin ändert das Steuergerät 4 die Regelzeitkonstante des im Parallelbetrieb Slavefunktion ausübenden Generators wieder dahingehend, dass diesem Generator eine niedrige Regelzeitkonstante zugeordnet ist. Dadurch wird dieser Generator in die Lage versetzt, die im zugehörigen Teilbordnetz auftretenden Schwankungen schnell auszugleichen.

Bei dem vorstehend beschriebenen Ausführungsbeispiel ist das Koppelelement 3 eine Sicherung. Alternativ dazu kann es sich beim Koppelelement 3 auch um einen hochohmigen Ohmschen Widerstand, einen Gleichspannungswandler oder einen Schalter handeln.

Alternativ zu den vorstehend beschriebenen Ausführungsbeispielen kann eine Vorrichtung gemäß der Erfindung auch mehr als zwei Generatoren aufweisen. In diesem Fall wird vorzugsweise einem der Generatoren Masterfunktion und allen weiteren Generatoren Slavefunktion zugeordnet.

Die Erfassung der Auslastungszustände der Generatoren erfolgt vorzugsweise über eine Auswertung des Tastsignals der Reglerendstufe oder eines daraus abgeleiteten Signals. Alternativ dazu erfolgt die Erfassung der Auslastungszustände über eine Auswertung des Erregerstroms mindestens eines Generators oder einer daraus abgeleiteten Größe. Eine weitere Alternative besteht darin, dass die Erfassung der Auslastungszustände durch eine Auswertung des Generatorabgabestromes oder einer daraus abgeleiteten Größe erfolgt. Ferner besteht die Möglichkeit, die Erfassung der Auslastungszustände über eine Auswertung der Erregerspannung oder einer daraus abgeleiteten Größe vorzunehmen.

Eine Ausführungsform der Erfindung besteht darin, von mindestens einem der Regler den Auslastungszustand des zugehörigen Generators zu ermitteln und diesen Auslastungszustand zur Berechnung des Sollauslastungszustandes des anderen Generators zu verwenden.

Vorzugsweise bildet das Steuergerät 4 mit mindestens einem der Spannungsregler eine bauliche Einheit.

Bezugszeichenliste:
- 1: Erster Generator
- 1a: Regler des ersten Generators
- 2: Zweiter Generator
- 2a: Regler des zweiten Generators
- 3: Koppelelement
- 4: Steuergerät
- 5: Verbraucher
- 6: Schalter
- 7: Kondensator, bzw. Batterie
- 8: Diode
- 9: Diode
- 10: Verbraucher
- 11: Schalter
- 12: Kondensator, bzw. Batterie
- 13: Masseanschluss des Steuergerätes
- 14: Erste Steuerleitung
- 15: Zweite Steuerleitung
- TB1: Erstes Teilbordnetz
- TB2: Zweites Teilbordnetz

## Patentansprüche

1. Vorrichtung zur Spannungsversorgung der Verbraucher eines Kraftfahrzeug-Bordnetzes, welche aufweist:
- einen ersten Generator,
- einen dem ersten Generator zugeordneten Spannungsregler,
- einen zweiten Generator,
- einen dem zweiten Generator zugeordneten Spannungsregler und
- ein Steuergerät,
**dadurch gekennzeichnet, dass** das Steuergerät (4) mit mindestens einem der beiden Regler (1a,2a) verbunden ist und diesem ein Steuersignal zuführt und dass der Regler in Abhängigkeit von diesem Steuersignal die Auslastung des zugehörigen Generators (1,2) verändert.

2. Vorrichtung nach Anspruch 1, **dadurch gekennzeichnet, dass** das jeweilige Signal Informationen über eine auslastungsbestimmende Größe des jeweiligen Generators (1,2) enthält.

3. Vorrichtung nach Anspruch 1 oder 2, **dadurch gekennzeichnet, dass** die Erfassung des Auslastungsgrades über die Auswertung des Tastsignals der Reglerendstufe oder eines daraus abgeleiteten Signals erfolgt.

4. Vorrichtung nach Anspruch 1 oder 2, **dadurch gekennzeichnet, dass** die Erfassung des Auslastungsgrades über die Auswertung des Erregerstromes mindestens eines Generators oder einer daraus abgeleiteten Größe erfolgt.

5. Vorrichtung nach Anspruch 1 oder 2, **dadurch gekennzeichnet, dass** die Erfassung des Auslastungszustandes über die Auswertung des Generatorabgabestromes oder einer daraus abgeleiteten Größe erfolgt.

6. Vorrichtung nach Anspruch 1 oder 2, **dadurch gekennzeichnet, dass** die Erfassung des Auslastungszustandes über die Auswertung der Erregerspannung oder einer daraus abgeleiteten Größe erfolgt.

7. Vorrichtung nach einem der Ansprüche 1 - 6, **dadurch gekennzeichnet , dass** die am Bordnetz angeschlossenen Generatoren gleich ausgelastet werden.

8. Vorrichtung nach einem der vorhergehenden Ansprüche,
**dadurch gekennzeichnet, dass** das Steuergerät (4) mit beiden Reglern (1a,2a) verbunden ist und beiden Reglern jeweils ein Steuersignal zuführt und dass die beiden Regler in Abhängigkeit vom jeweiligen Steuersignal die Auslastung des jeweils zugehörigen Generators (1,2) verändern, so dass beide Generatoren gleich ausgelastet sind.

9. Vorrichtung nach einem der vorhergehenden Ansprüche,
**dadurch gekennzeichnet, dass** das Steuergerät (4) mit beiden Reglern (1a,2a) verbunden ist und von mindestens einem der beiden Regler der Auslastungszustand ermittelt und zur Berechnung des Sollauslastungszustandswertes des zweiten Generators verwendet wird.

10. Vorrichtung nach einem der vorhergehenden Ansprüche,
**dadurch gekennzeichnet, dass** der Regler (1a,2a) die Ausgangsspannung des jeweiligen Generators (1,2) auf einen vorgegebenen Maximalwert beschränkt.

11. Vorrichtung nach Anspruch 10, **dadurch gekennzeichnet, dass** bei Erreichen des vorgegebenen Maximalwertes eine Fehlermeldung ausgegeben wird.

12. Vorrichtung nach einem der vorhergehenden Ansprüche,
**dadurch gekennzeichnet, dass** der Regler (1a,2a) die Ausgangsspannung des jeweiligen Generators (1,2) unabhängig von Auslastungsvorgaben auf einem vorgegebenen Minimalwert hält.

13. Vorrichtung nach Anspruch 12, **dadurch gekennzeichnet, dass** bei Erreichen des vorgegebenen Minimalwertes eine Fehlermeldung ausgegeben wird.

14. Vorrichtung nach einem der vorhergehenden Ansprüche,
**dadurch gekennzeichnet, dass** das Steuergerät (4) die Regelgeschwindigkeit eines oder beider Regler (1a,2a) vorgibt.

15. Vorrichtung nach Anspruch 14, **dadurch gekennzeichnet, dass** das Steuergerät (4) den beiden Reglern (1a,2a) unterschiedliche Regelgeschwindigkeiten vorgibt.

16. Vorrichtung nach Anspruch 15, **dadurch gekennzeichnet, dass** einer der Generatoren Masterfunktion und der andere Generator Slavefunktion ausübt und dass das Steuergerät dem Regler des Masterfunktion ausübenden Generators eine hohe Regelgeschwindigkeit und dem Regler des Slavefunktion ausübenden Generators eine niedrige Regelgeschwindigkeit vorgibt.

17. Vorrichtung nach einem der vorhergehenden Ansprüche,
**dadurch gekennzeichnet, dass** die Generatoren (1,2) verschiedenen Bordnetzteilen (TB1,TB2) angehören und über ein Koppelelement (3) miteinander verbunden oder verbindbar sind.

18. Vorrichtung nach Anspruch 17, **dadurch gekennzeichnet, dass** das Koppelelement (3) eine Sicherung, ein Ohmscher Widerstand, ein Gleichspannungswandler oder ein Schalter ist.

19. Vorrichtung nach Anspruch 17 oder 18, **dadurch gekennzeichnet , dass** das Steuergerät (4) bei voneinander entkoppelten Generatoren den Reglern ein Steuersignal zuführt, das einer Spannungsvorgabe für den jeweiligen Generator entspricht.

20. Vorrichtung nach einem der Ansprüche 17 - 19, **dadurch gekennzeichnet, dass** das Steuergerät (4) bei voneinander entkoppelten Generatoren dem Regler des Slavefunktion ausübenden Generators eine hohe Regelgeschwindigkeit vorgibt.

21. Vorrichtung nach einem der Ansprüche 17 - 20 , **dadurch gekennzeichnet, dass** das Steuergerät (4) bei voneinander entkoppelten Generatoren den Reglern Steuersignale zuführt, die unterschiedlichen Sollspannungswerten entsprechen.

22. Vorrichtung nach einem der vorhergehenden Ansprüche,
**dadurch gekennzeichnet, dass** die Spannungsversorgung des Steuergerätes (4) über eine Diode (8, 9) aus dem Bordnetz erfolgt.

23. Vorrichtung nach Anspruch 22, **dadurch gekennzeichnet, dass** das Steuergerät (4) über eine erste Diode (8) mit dem ersten Teilbordnetz (TB1) und über eine zweite Diode (9) mit dem zweiten Teilbordnetz (TB2) verbunden ist.

24. Vorrichtung nach einem der vorhergehenden Ansprüche,
**dadurch gekennzeichnet, dass** sie mehr als zwei Generatoren aufweist, einer der Generatoren Masterfunktion ausübt und die weiteren Generatoren Slavefunktion ausüben.

25. Vorrichtung nach einem der vorhergehenden Ansprüche,
**dadurch gekennzeichnet, dass** das Steuergerät und mindestens ein Spannungsregler eine bauliche Einheit bilden.
